# EUROPÄISCHE PATENTSCHRIFT

(11) **EP 0 723 242 B1**
(45) Veröffentlichungstag und Bekanntmachung des Hinweises auf die Patenterteilung: **10.10.2001**
(21) Anmeldenummer: 95117232.9
(22) Anmeldetag: 02.11.1995
(51) Int. Cl.: G06K 7/06

(54) **Kartenleser für Chipkarten**
Chip card reader
Lecteur de carte à puce

(30) Priorität: 20.01.1995 DE 19501620
(43) Veröffentlichungstag der Anmeldung: 24.07.1996
(73) Patentinhaber: ROBERT BOSCH GMBH, 70442 Stuttgart (DE)
(72) Erfinder: Jelinek, Egbert, Ing., D-31157 Sarstedt (DE)

(56) Entgegenhaltungen:
- EP-A- 0 167 356
- EP-A- 0 468 179
- DE-U- 8 907 699
- FR-A- 2 599 530
- FR-A- 2 607 290
- FR-A- 2 638 005

## Beschreibung

Die Erfindung betrifft einen Kartenleser für Chipkarten nach dem Oberbegriff des Anspruchs 1. EP-A-0.468.179 beschreibt einen entsprechenden Kartenleser. Für die elektronische Verwaltung von Dienstleistungssystemen, z. B. Sicherheitssystemen, stationären und mobilen Telefondiensten, Bank- und Gesundheitswesen finden seit geraumer Zeit Plastikkarten Verwendung, auf denen ein Mikrochip mit den veränderlichen und unveränderlichen Daten angeordnet ist (sog. Chipkarten). Mittels der gespeicherten Daten wird bei jedem Zugangsversuch die Zugangsberechtigung und/oder die Zulässigkeit der angestrebten Handlung elektronisch geprüft. Dazu wird die Chipkarte in einem Kartenleser so positioniert, daß die auf der Oberfläche der Chipkarte angeordneten Kontakte des Mikrochips mit entsprechenden Kontakten im Kartenleser elektrisch leitend verbunden sind und so der Austausch von Daten ermöglicht wird.

Die Aktualisierung der Daten im Mikrochip setzt voraus, daß außer Lesevorgängen auch Schreibvorgänge stattfinden. Viele Kartenleser, vor allem solche, bei denen variable Guthaben verwaltet werden, weisen daher neben der Möglichkeit zum Lesen auch eine Möglichkeit zum Schreiben auf.

Damit die Chipkarte während der Schreib- und Lesevorgänge ortsunveränderlich im Kartenleser verharrt, ist diese darin arretiert. Für diese Arretierung sind mechanische und elektromechanische Lösungen bekannt.

Bei rein mechanischen Arretierungen entfällt der Verbrauch an elektrischer Energie für diesen Vorgang. Dafür kann bei elektromechanischer Arretierung einfacher eine elektrische Verriegelung für die Dauer des Datenaustauschs zwischen dem Kartenleser und der Chipkarte hergestellt werden. Es muß jedoch sichergestellt sein, daß durch willkürliches Entnehmen der Chipkarte kein Schreibvorgang auf den Mikrochip unterbrochen wird, da dies die teilweise Zerstörung der Daten und damit die weitere Unbrauchbarkeit der Chipkarte nach sich zieht. Dabei soll der Stromverbrauch für die Kartenmanipulation möglichst niedrig sein, denn insbesondere bei Mobilgeräten ist die Nutzungsdauer bis zum notwendigen Aufladen oder Austausch der verwendeten Akkumulatoren von entscheidender Bedeutung für die Wettbewerbsfähigkeit.

Der Erfindung liegt daher die Aufgabe zugrunde, einen Kartenleser für Chipkarten mit elektromechanischer Arretierung der Chipkarte im Kartenleser anzugeben, bei dem der ordungsgemäße Abschluß eines Schreibvorgangs auf den Mikrochip auch beim willkürlichen Entnehmen der Chipkarte gewährleistet ist und dessen Stromverbrauch äußerst gering ist.

Die Lösung dieser Aufgabe erfolgt mit den im kennzeichnenden Teil des Anspruchs 1 angegebenen Maßnahmen.

Der erfindungsgemäße Kartenleser für Chipkarten mit einem Mikrochip und dessen Kontakten auf der Oberfläche, mit einem Kartenschacht zur Aufnahme und elektromechanischen Arretierung der Chipkarte und mit Gegenkontakten zum mechanischen Zusammenwirken mit den Kontakten des Mikrochips und zur elektrisch leitenden Verbindung eines Rechners mit dem Mikrochip, mit einer ersten, auf die An- oder Abwesenheit einer Chipkarte im Kartenschacht ansprechenden Schaltanordnung, ist erfindungsgemäß gekennzeichnet durch einen im Kartenschacht längsbeweglichen Schlitten zum Transport der Chipkarte mit einer zum Zusammenwirken mit dem Anker eines Elektromagneten ausgebildeten, quer zur Bewegungsrichtung des Schlittens verlaufenden, in Ausschubrichtung wirkenden Rast, und durch eine auf den Überhub des Schlittens ansprechende zweite Schaltanordnung.

Durch die erfindungsgemäßen Maßnahmen ergibt sich der Vorteil, daß der Elektromagnet nur im Augenblick der Entriegelung Strom verbraucht und daher der hierdurch hervorgerufene Energieverbrauch äußerst gering ist.

Vorteilhafte Weiterbildungen und Ausgestaltungen der Erfindung ergeben sich aus den Unteransprüchen.

Eine Weiterbildung der Erfindung besteht darin, daß die zweite Schaltanordnung durch die beim Einschieben in den Kartenschacht vorlaufende Kante des Schlittens betätigbar ist. Damit entfallen vorteilhaft Bauteile zur Übertragung der Schlittenbewegung auf die Schaltanordnung.

Eine andere Weiterbildung der Erfindung besteht darin, daß beide Schaltanordungen mit Eingängen des Rechners verbunden und derart geschaltet sind, daß bei gleichzeitigem Ablauf eines Schreibvorgangs vom Kartenleser auf die Chipkarte und Betätigung des Schlittens zur Kartenentnahme die Aktivierung des Elektromagneten unterbleibt. So können Schreibvorgänge ohne Datenverlust ordnungsgemäß abgeschlossen und Datenverlust vermieden werden.

Eine andere Weiterbildung der Erfindung ist gekennzeichnet durch eine Zeitschaltung zur verzögerten Freigabe des Schlittens durch den Elektromagneten nach Abschluß des aktuellen Schreibvorgangs. Diese Ausbildung des Kartenlesers macht keine erneute Betätigung der Chipkarte zur Einleitung des Auswurfs aus dem Kartenschacht notwendig und erhöht so den Bedienungskomfort.

Eine vorteilhafte Ausgestaltung des Kartenlesers ist gekennzeichnet durch eine weitere Zeitschaltung zur Aufrechterhaltung der Schlittenarretierung durch den Elektromagneten beim Betätigen beider Schaltanordnungen innerhalb einer eingestellten Zeitspanne. Dadurch wird verhindert, daß die Chipkarte unmittelbar nach dem Einführen entriegelt wird, weil dabei der Überhubschalter betätigt wurde.

Eine vorteilhafte Weiterbildung des Kartenlesers sieht vor, daß die mit den Kontakten des Mikrochips auf der Chipkarte zusammenwirkenden Gegenkontakte der Kontaktanordnung im Kartenschacht um den Überhub und in Richtung des Überhubs länger sind als die Kontakte des Mikrochips.

Diese Ausführungsform des Kartenlesers erlaubt eine besonders gedrängte Bauweise mit geringen Schaltwegen der Schaltanordnungen und die Kommunikation des Rechners auch noch zu Beginn des Entnahmevorgangs der Chipkarte aus dem Kartenschacht.

Ein Ausführungsbeispiel der Erfindung ist in der Zeichnung dargestellt und in der nachfolgenden Beschreibung näher erläutert. Es zeigen:
- Fig. 1: eine Ausführungsform einer gebräuchlichen Chipkarte,
- Fig. 2: ein Schaltschema im Zusammenhang mit der Erfindung,
- Fig. 3: schematisch den Kartenschacht eines Kartenlesers in Draufsicht,
- Fig. 4: den Kartenschacht aus Fig. 3 im Längsschnitt, mit arretierter Chipkarte,
- Fig. 5: den gleichen Kartenschacht mit ausgeworfener Chipkarte und
- Fig. 6: vergrößert eine Einzelheit aus Fig. 4.

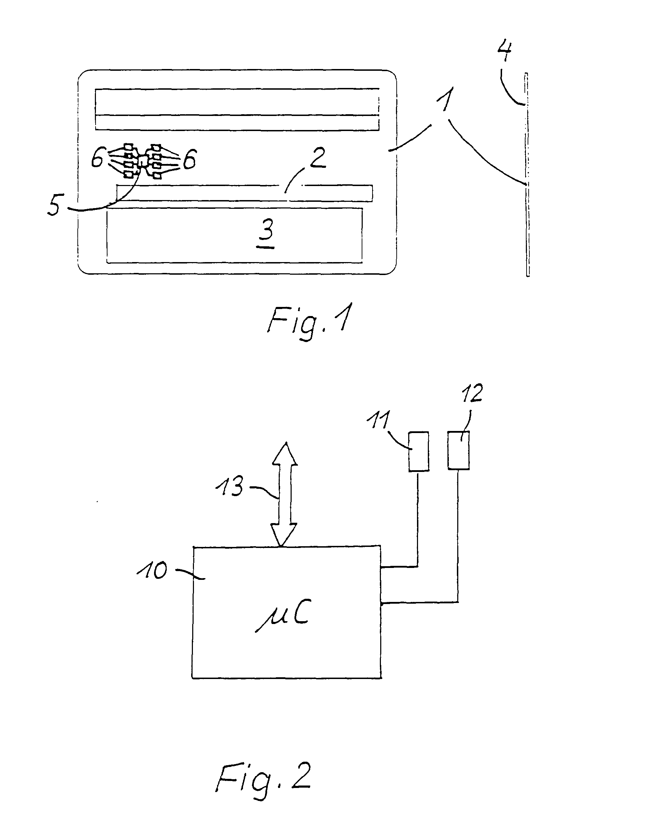

Die in Fig. 1 dargestellte Chipkarte 1 weist im allgemeinen beidseitig bedruckte Flächen auf, die den Verwendungszweck der Karte charakterisieren und auch Werbeaussagen zum Inhalt haben. Weiter können Registrierfelder 2 und Unterschriftsfelder 3 und/oder (nicht dargestellt) ein Fotofeld auf der Vorderseite der Chipkarte und Magnetstreifen 4 auf der Rückseite vorhanden sein. Immer aber enthält die Karte einen Mikrochip 5, der elektrisch leitend mit einer Anzahl Oberflächenkontakten 6 verbunden ist und über diese und entsprechende Gegenkontakte im Kartenschacht eines Gerätes gelesen und beschrieben werden kann.

Wie bereits ausgeführt, muß bei jeder Art von Arretierung der Chipkarte 1 unter allen Umständen ein Schreibvorgang von dem Gerät, im folgenden Kartenleser genannt, in dessen Kartenschacht sich die Chipkarte gerade befindet, auf den Mikrochip zu Ende gebracht werden, bevor die Chipkarte entnommen wird, um Datenverlust zu vermeiden. Der Schreibvorgang dauert maximal 50 Millisekunden.

An den Rechner 10 des erfindungsgemäßen Kartenlesers sind nach Fig. 2 zwei Endschalter 11, 12 angeschlossen, die beide im Kartenschacht angeordnet sind und mit der in den Kartenschacht eingeführten Chipkarte in besonderer, nachfolgend genau beschriebener Weise zusammenwirken. Der Doppelpfeil 13 deutet den Datentransfer von und zum Rechner 10 an.

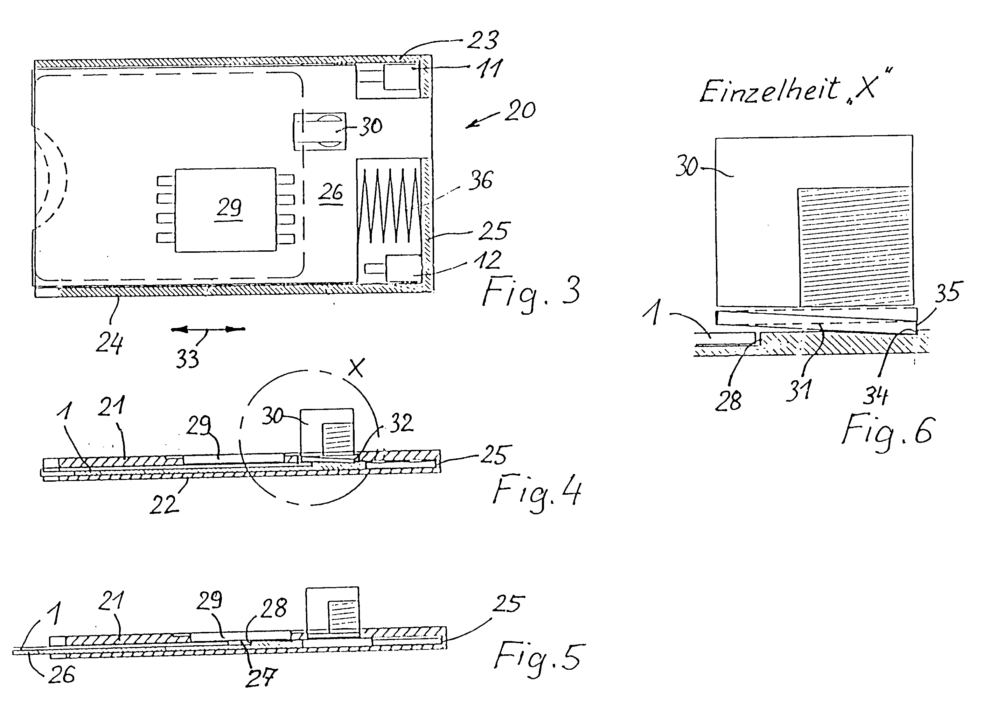

Der in den Figuren 3 bis 6 dargestellte Kartenschacht 20 eines Kartenlesers weist eine flache rechteckige Form mit zwei gegenüberliegenden Seitenwänden 21, 22 auf, die an drei Kanten durch Schmalseiten 23, 24 und den Schachtboden 25 miteinander verbunden sind. Im Kartenschacht 20 ist ein Schlitten 26 zur Aufnahme der Chipkarte 1 längsverschiebbar angeordnet. Die Chipkarte 1 ruht dabei in einer Vertiefung 27 des Schlittens 26 und liegt mit ihrer vorlaufenden Kante an einer Kante 28 der Vertiefung 27 an. In die Seitenwand 21 ist eine Kontaktanordnung 29 eingelassen, deren Kontakte bei im Kartenschacht 20 arretierter Chipkarte 1 mit den Kontakten 6 des Mikrochips 5 elektrisch leitend verbunden sind.

Zur Arretierung der Chipkarte 1 im Kartenschacht 20 ist auf der Seitenwand 21 ferner ein Elektromagnet 30 befestigt, dessen am Joch gelenkig angebrachter Anker 31 durch einen Durchbruch 32 der Seitenwand 21 ragt und mit einer quer zur Bewegungsrichtung (Doppelpfeil 33) des Schlittens 26 auf dessen Oberseite verlaufenden Rast 34 zusammenwirkt. Die Rast 34 begrenzt eine sägezahnförmig verlaufende Vertiefung einseitig und wirkt daher nur in Ausschubrichtung. Das freie Ende 35 des Ankers 31 stößt dabei nach dem Einschieben des Schlittens 26 mit der Chipkarte 1 in den Kartenschacht 20 an die Rast 34 und verhindert das Zurückschieben des Schlittens 26 und das Auswerfen der Chipkarte unter dem Einfluß der am Schachtboden 25 befestigtigten Druckfeder 36, deren freies Ende in den Kartenschacht vorspringt und sich bei eingeschobenem Schlitten 26 unter Vorspannung an dessen vorlaufender Kante abstützt. In dem nicht vom Schlitten 26 bestrichenen Bereich 37 des Kartenschachts 20 sind zwei Schaltanordnungen 11, 12 vorgesehen, die durch die vorlaufende Kante des Schlittens 26 in unterschiedlicher Weise betätigbar sind. Beide Schaltanordnungen 11, 12 können z. B. mechanische Schalter oder Lichtschranken und vom "Schließer"-Typ sein.

Zum Gebrauch wird die Chipkarte 1 in die Vertiefung 27 des Schlittens 26 eingelegt und mit dem Schlitten 26 zusammen in den Kartenschacht 20 eingeschoben. Dabei gleitet gegen Ende des Hubs das freie Ende 35 des Ankers 31 über die Rast 34 hinweg, rastet bei der weiteren Vorwärtsbewegung darin ein und hält die Chipkarte 1 nach dem Loslassen in dieser Position. Gleichzeitig wird die Druckfeder 36 zusammengedrückt, vorgespannt und der Kontaktsatz der Kontaktanordnung 29 mit den Kontakten 6 der im Kartenschacht 20 arretierten Chipkarte 1 elektrisch leitend verbunden und durch die von der vorlaufenden Kante des Schlittens 26 betätigte Schaltanordnung 11 die korrekte Lage des Schlittens 26 mit der Chipkarte 1 im Kartenschacht 20 gemeldet. Damit kann der Dateninhalt des Mikrochips 5 auf der Chipkarte 1 gelesen und auch durch Einschreiben neuer Daten geändert werden.

Zum Entnehmen der Chipkarte 1 aus dem Kartenschacht 20 wird die Chipkarte 1 zunächst zusammen mit dem Schlitten 26 gegen die Kraft der Druckfeder 36 weiter in den Kartenschacht 20 gedrückt und dabei die Schaltanordnung 12 betätigt. Der darin enthaltene Schalter aktiviert den Elektromagneten 30, worauf der Anker 31 angezogen und der Schlitten 26 entriegelt wird. Gleichzeitig wird bei Betätigung der Schaltanordnung 12 dem Rechner 10 signalisiert, daß in Kürze keine Kommunikation mit der Chipkarte 1 möglich sein wird. Eventuell gerade ablaufende Interaktionen mit dem Mikrochip 5 auf der Chipkarte 1 werden daher vom Rechner beendet, neue Schreibvorgänge nicht mehr gestartet. Zweckmäßigerweise sind die Kontakte der Kontaktanordnung 29 in Einschubrichtung der Chipkarte 1 so weit verlängert, daß die Verbindung mit den Kontakten 6 auf der Chipkarte 1 auch dann noch aufrecht erhalten ist, wenn die Entnahme der Chipkarte 1 in der beschriebenen Weise eingeleitet ist, mithin beide Schaltanordnungen 11, 12 betätigt sind. Die Schaltanordnung 11 besitzt einen Überweg im geschalteten Zustand, die das Überdrücken der Chipkarte bis zum Betätigen der Schaltanordnung 11 und/oder 12 ohne Schaden erlaubt.

Findet gerade ein Schreibvorgang auf den Mikrochip 5 statt, dessen Unterbrechung zu Datenverlust führt, so wird durch den Rechner 10 die Aktivierung des Elektromagneten 30 verhindert und der Schreibvorgang vollendet. Erst danach erfolgt verzögert die Auslösung des Elektromagneten 30 und die Freigabe des Schlittens, der dann durch die Kraft der vorgespannten Druckfeder 36 in die Ausgangslage (Fig. 5) zur Entnahme der Chipkarte 1 gebracht wird. Es kann jedoch auch vorgesehen sein, daß anstelle der verzögerten Auslösung des Elektromagneten 30 nach einem Schreibvorgang erst eine zweite Betätigung der Schaltanordnung 12 den Schlitten 26 freigibt.

Durch entsprechende elektrische Verzögerungsschaltungen wird verhindert, daß beim unmittelbar aufeinanderfolgenden Betätigen der Schaltanordnung 11 und der Schaltanordnung 12 beim Einführen der Chipkarte 1 in den Kartenschacht 20 der Schlitten 26 entriegelt und die Karte wieder ausgeworfen wird.

Die Schaltanordnung 12 kann, wie dargestellt, mittelbar durch die vorlaufende Kante des Schlittens 26 oder auch unmittelbar durch die Chipkarte 1 betätigbar sein.

## Patentansprüche

1. Kartenleser für Chipkarten mit einem Mikrochip und dessen Kontakten auf der Oberfläche, mit einem Kartenschacht zur Aufnahme und elektromechanischen Arretierung der Chipkarte und mit Gegenkontakten zum mechanischen Zusammenwirken mit den Kontakten des Mikrochips und zur elektrisch leitenden Verbindung eines Rechners mit dem Mikrochip, mit einer ersten, auf die An- oder Abwesenheit einer Chipkarte im Kartenschacht ansprechenden Schaltanordnung, mit einem im Kartenschacht (20) längsbeweglichen Schlitten (26) zum Transport der Chipkarte (1), der eine quer zur Bewegungsrichtung des Schlittens angeordnete Rast (34) aufweist und der im eingeschobenen Zustand gegen eine Druckfeder (36) drückt, mit einem Elektromagneten (30), dessen am Joch des Elektromagneten (30) gelenkig angebrachter Anker (31) die Rast (34) in eingeschobenem Zustand des Schlittens (26) hintergreift, **gekennzeichnet durch** eine auf den Überhub des Schlittens (26) ansprechende zweite Schaltanordnung (12), die zur Entriegelung des Schlittens (26) den Elektromagneten (30) aktiviert, und **dadurch**, daß der Anker die Rast in stromlosem Zustand des Elektromagneten (30) hintergreift.

2. Kartenleser für Chipkarten nach Anspruch 1, **dadurch gekennzeichnet, daß** die zweite Schaltanordnung (12) durch die beim Einschieben in den Kartenschacht (20) vorlaufende Kante des Schlittens (26) betätigbar ist.

3. Kartenleser für Chipkarten nach einem der Ansprüche 1 oder 2, **dadurch gekennzeichnet, daß** beide Schaltanordungen (11, 12) mit Eingängen des Rechners verbunden und derart geschaltet sind, daß bei gleichzeitigem Ablauf eines Schreibvorgangs vom Kartenleser auf die Chipkarte und Betätigung des Schlittens (26) zur Kartenentnahme die Aktivierung des Elektromagneten (30) unterbleibt.

4. Kartenleser für Chipkarten nach Anspruch 3, **gekennzeichnet durch** eine Zeitschaltung zur verzögerten Freigabe des Schlittens (26) **durch** den Elektromagneten (30) nach Abschluß des aktuellen Schreibvorgangs.

5. Kartenleser für Chipkarten nach einem der Ansprüche 1 bis 4, **gekennzeichnet durch** eine weitere Zeitschaltung zur Aufrechterhaltung der Schlittenarretierung **durch** den Elektromagneten (30) beim Betätigen beider Schaltanordnungen (11, 12) innerhalb einer eingestellten Zeitspanne.

6. Kartenleser für Chipkarten nach einem der Ansprüche 1 bis 5, **dadurch gekennzeichnet, daß** die mit den Kontakten (6) des Mikrochips (5) auf der Chipkarte (1) zusammenwirkenden Gegenkontakte der Kontaktanordnung (29) im Kartenschacht um den Überhub und in Richtung des Überhubs länger sind als die Kontakte (6) des Mikrochips (5).

## Claims

1. Card reader for smart cards having a microchip and the contacts thereof on the surface, having a card shaft for receiving and electromechanically locking the smart card and having mating contacts for mechanical interaction with the contacts of the microchip and for electrically conductively connecting a computer to the microchip, having a first switching arrangement, which responds to the presence or absence of a smart card in the card shaft, having a slide (26) which is longitudinally moveable in the card shaft (20) and serves for transporting the smart card (1), which slide has a catch (34) arranged transversely with respect to the direction of movement of the slide and, in the pushed-in state, presses against a compression spring (36), having an electromagnet (30), whose armature (31) fitted to the yoke of the electromagnet (30) in an articulated manner engages behind the catch (34) in the pushed-in state of the slide (26), **characterized by** a second switching arrangement (12), which responds to the overtravel of the slide (26) and activates the electromagnet (30) for the purpose of unlocking the slide (26), and in that the armature engages behind the catch in the de-energized state of the electromagnet (30).

2. Card reader for smart cards according to Claim 1, **characterized in that** the second switching arrangement (12) can be actuated by the leading edge of the slide (26) during the process of pushing into the card shaft (20).

3. Card reader for smart cards according to either of Claims 1 and 2, **characterized in that** the two switching arrangements (11, 12) are connected to inputs of the computer and are switched in such a way that in the event of the simultaneous proceeding of a write operation from the card reader to the smart card and actuation of the slide (26) for removal of the card, the activation of the electromagnet (30) does not happen.

4. Card reader for smart cards according to Claim 3, **characterized by** a timing circuit for the delayed release of the slide (26) by the electromagnet (30) after the conclusion of the present write operation.

5. Card reader for smart cards according to one of Claims 1 to 4, **characterized by** a further timing circuit for maintaining the slide locking by the electromagnet (30) in the event of the two switching arrangements (11, 12) being actuated within a set period of time.

6. Card reader for smart cards according to one of Claims 1 to 5, **characterized in that** the mating contacts - which interact with the contacts (6) of the microchip (5) on the smart card (1) - of the contact arrangement (29) in the card shaft are longer by the overtravel and in the direction of the overtravel than the contacts (6) of the microchip (5).

## Revendications

1. Lecteur de carte à puce comprenant une puce et les contacts de celle-ci à la surface de la carte,
- un compartiment à carte pour recevoir et bloquer de manière électromécanique la carte à puce et des contacts complémentaires pour coopérer mécaniquement avec les contacts de la puce et assurer la liaison électrique d'un calculateur avec la puce,
- un premier circuit mis en oeuvre par la présence ou l'absence d'une carte à puce dans le compartiment,
- un chariot (26) mobile longitudinalement dans le compartiment à carte (20) pour transporter la carte à puce (1), ce chariot ayant une encoche (34) transversale à la direction de déplacement du chariot et poussant à l'état engagé contre un ressort de compression (36), et
- un électroaimant (30) dont la culasse porte de manière articulée l'induit (31) qui vient dans l'encoche (34) du chariot (26) à l'état engagé,
**caractérisé par**
un second circuit (12) mis en oeuvre par le dépassement de course du chariot (26) pour activer l'électroaimant (30) et déverrouiller le chariot (26), l'induit s'accrochant derrière l'encoche lorsque l'électroaimant (30) n'est pas alimenté.

2. Lecteur de carte à puce selon la revendication 1,
**caractérisé en ce que**
le second circuit (12) est actionné par le bord avant du chariot (26) lors de l'introduction dans le compartiment à carte (20).

3. Lecteur de carte à puce selon l'une quelconque des revendications 1 ou 2,
**caractérisé en ce que**
les deux circuits (11, 12) sont reliés aux entrées du calculateur et sont branchés pour qu'en cas de déroulement simultané d'une opération d'écriture du lecteur de carte sur la carte à puce et de l'actionnement du chariot (26) pour extraire la carte, l'activation de l'électroaimant (30) reste interdite.

4. Lecteur de carte à puce selon la revendication 3,
**caractérisé par**
un circuit de temporisation pour retarder la libération du chariot (26) par l'électroaimant (30) à la fin de l'opération d'écriture actuelle.

5. Lecteur de carte à puce selon l'une quelconque des revendications 1 à 4,
**caractérisé par**
un autre circuit de temporisation pour maintenir dans un intervalle de temps réglé le blocage du chariot par l'électroaimant (30) en cas d'actionnement des deux circuits (11, 12).

6. Lecteur de carte à puce selon l'une quelconque des revendications 1 à 5,
**caractérisé en ce que**
les contacts complémentaires du dispositif à contacts (29) qui coopèrent avec les contacts (6) de la puce (5) de la carte (1) dans le compartiment à carte, dépassent en longueur les contacts (6) de la puce (5) de façon correspondante au dépassement de course, dans la direction de ce dépassement de course.
